# EUROPÄISCHE PATENTSCHRIFT

(11) **EP 0 842 643 B1**
(45) Veröffentlichungstag und Bekanntmachung des Hinweises auf die Patenterteilung: **20.03.2002**
(21) Anmeldenummer: 97119410.5
(22) Anmeldetag: 06.11.1997
(51) Int. Cl.: A61C 8/00

(54) **Zweiteiliges dentales Implantat mit aufgalvanisierter Metallschicht**
Two-piece dental implant with galvanized metallic layer
Implant dentaire en deux parties comportant une couche métallique galvanisée

(30) Priorität: 16.11.1996 DE 19647489
(43) Veröffentlichungstag der Anmeldung: 20.05.1998
(73) Patentinhaber: C. HAFNER GmbH & Co., 75173 Pforzheim (DE)
(72) Erfinder: Weigl, Paul, Dr., 61352 Bad Homburg (DE)
(74) Vertreter: Dimmerling, Heinz, Dipl.-Ing.

(56) Entgegenhaltungen:
- EP-A- 0 534 078
- DE-A- 19 609 174
- US-A- 3 589 011

## Beschreibung

Die Erfindung betrifft ein zweiteiliges dentales Implantat mit einem Implantatabutment und einem Implantatkörper.

Nächstliegender Stand der Technik wird in DE-A-196 09 174 gesehen. Der Oberbegriff von Anspruch 1 wird durch die aus DE-A-196 09 174 bekannten Merkmalen gebildet.

In der Zahnheilkunde wird einem Zahnverlust zunehmend mit dem Einsatz dentaler Implantatsysteme begegnet. Auch der Ersatz von anderen Körperteilen, wie zum Beispiel Ohr-, Augen- oder Fingerprothesen, läßt sich durch modifizierte dentale Implantatsysteme elegant und suffizient verankern. Als Werkstoff für Implantate wird heute fast ausschließlich Reintitan verwendet.

Das Implantat wird in ein durch chirurgische Maßnahmen geschaffenes Knochenlager inseriert. Wird das Implantat während seiner Einheilphase keinen beziehungsweise sehr geringen Belastungen ausgesetzt, ist die Wahrscheinlichkeit einer ankylotischen Verbindung zwischen enossalem Implantatkörper und dem angrenzenden Knochen sehr hoch. Für eine vollständige Osseointegration benötigt ein Implantat cirka drei Monate im Unterkiefer und cirka fünf bis sechs Monate im Oberkiefer oder sonstigen Insertionsorten. Um innerhalb dieses Zeitintervalls eine klinisch belastungsfreie Situation für das inserierte Implantat zu schaffen, wird ein zweizeitiges Vorgehen für die Implantatinsertion bevorzugt.

Ein dentales Implantat kann in drei Bereiche geteilt werden - der enossale Implantatkörper, die Region des Weichgewebedurchtritts und der intraorale Anteil zur Aufnahme der Suprastruktur. Rotationssymmetrische enossale Implantatkörper finden heute die häufigste Verwendung. Der intraorale Anteil des Implantats weist die höchste Variabilität in Form und Funktion auf. Je nach geplanter prothetischer Verwendung des Implantatpfeilers gleicht das Abutment entweder einem präparierten Zahn zur Aufnahme einer Vollkrone oder einem Halteelement auf einem avitalen Zahn (Knopfanker, Steg, Magnetattachment). Für Epithesen finden vor allem Magnetattachments und Knopfanker Verwendung.

Bei zweizeitigem Vorgehen bei der Implantatinsertion erfolgt die Einheilung des Implantats sub- oder transepithelial. Erst nach der Einheilungsperiode wird der Pfosten zur Aufnahme der prothetischen Versorgung, das sogenannte Implantatabutment, mit dem enossalen Implantatkörper verschraubt, um initiale Belastungen des enossalen Implantatkörpers zu vermeiden. Die Trennung des Implantats in enossalen Implantatkörper und aufschraubbaren Implantatabutment erfordert ein zweiteiliges oder mehrteiliges Implantatsystem. Die Verbindung dieser zwei- oder mehrteiligen Implantatsysteme weist je nach Hersteller unterschiedliche Konstruktionsmerkmale auf. Allen Systemen gemein ist die herstellungsbedingte Ungenauigkeit zwischen den Fügeflächen von enossalem Implantatkörper und Implantatabutment. Trotz hoher Drehmomente, mit denen die Verbindungsschrauben angezogen werden, sind Spalträume von 5 bis 20 µm zwischen enossalem Implantatkörper und Abutment nachweisbar. Unter horizontalen Belastungen, die zum Beispiel beim Kauvorgang auftreten, weiten sich die Spalträume zusätzlich auf.

Der Fügespalt liegt häufig im Bereich der periimplantären Bindegewebsmanschette. Dieses periimplantäre Weichgewebe ist im Unterschied zum Parodontalgewebe ein minderwertiges, schlecht durchblutetes Narbengewebe, das sich an die hochglanzpolierte Oberfläche des Implantats oder der Suprakonstruktion anlagert. Es reagiert gegenüber unzureichender Mundhygiene, rauhen Oberflächen und überstehenden Kronenrändern im allgemeinen empfindlicher als die dentogingivale Einheit des natürlichen Zahns. Die Ursachen und vor allem die Beherrschung der Entzündung dieses Gewebes - die sogenannte periimplantäre Mukositis - sind Gegenstand aktueller Forschung. Die Periimplantitis verursacht analog zur Parodontitis Geweberesorptionen, die zu kraterförmigen Knocheneinbrüchen um das Implantat führen und den rauhen enossalen Implantatkörper für Plaqueanlagerungen exponieren. Ein progredienter circulus vitiosus setzt ein und führt zum raschen Verlust des Implantats.

In einem Spalt Zwischen enossalem Implantatkörper und dem Abutment eines zweiteiligen Implantatsystems herrschen für anaerobe pathogene Keime ideale Milieubedingungen vor. Es ist vorstellbar, daß diese Spalten einen negativen Einfluß auf den Zustand der Weichgewebsmanschette haben und eine periimplantäre Mukositis oder Periimplantitis induzieren. Im Tierexperiment konnte kürzlich nachgewiesen werden, daß trotz strenger Plaquekontrolle und klinisch entzündungsfreiem Weichgewebe ein Infiltrat im Bereich der Verbindungsstelle histologisch nachweisbar ist.

Auch bei präziser extraoraler Fügung des Abutments sind keine absolut bakteriendichten Übergänge erzielbar, wie jüngste Untersuchungen zeigen.

Weiterhin besteht eine erhebliche Problematik bei zweiteiligen Implantatsystemen aufgrund häufig auftretenden Lockerungen der Abutments. Die extrem hohe Anzahl von Wechsellasten auf das Implantat während des Kau- und Schluckvorgangs verursacht ein Lösen der Verbindungsschraube. Vor allem bei definitiv zementierten Restaurationen wird wegen einer Lockerung des Abutments eine kostenintensive und zeitaufwendige Neuanfertigung der prothetischen Suprastruktur erforderlich.

Bisher existieren keine Implantatformen, die eine suffiziente Sicherung gegen ein Lösen der Schraube gewährleisten. Auch die Verwendung einer Schraube mit relativ großem konusförmigen Schraubenkopf, der unterkühlt in eine formschlüssige Matrize im enossalen Implantatkörper eingedreht wird, schaffte im klinischen Einsatz keine Abhilfe beziehungsweise statistisch signifikanten Abfall von auftretenden Lockerungen des Abutments.

Die Anstrengungen seitens der Implantathersteller, die Dichtigkeit ihrer zweiteiligen Implantatsysteme zu optimieren, erschöpfen sich darin, einen Silikonring in den Fügespalt zu plazieren. Mangelhafte Mundbeständigkeit zwingt zu häufigem Auswechseln dieser Silikonringe und führt zu einem erheblichen Nachsorgeaufwand bei Implantatpatienten. Aufgrund dieser schwerwiegenden klinischen Nachteile des Werkstoffs Silikon ist der klinische Einsatz mehr als fragwürdig, obwohl eine verbesserte Abdichtung mittels Silikonring in einem In-Vitro Experiment nachgewiesen werden konnte.

Hiervon ausgehend liegt der Erfindung die Aufgabe zugrunde, die aufgezeigten Schwierigkeiten bei zweiteiligen Implantatsystemen der genannten Art mit geringem Aufwand zu beseitigen. Das gemäß der Erfindung modifizierte Implantatabutment soll eine keimdichte Verbindung zum enossalen Implantatkörper gewährleisten und eine Lockerung der Verbindungsschraube während der klinischen Nutzungsperiode vermeiden.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung trägt das Abutment an der Kontaktstelle zum enossalen Implantatkörper oder der Implantatkörper an der Kontaktstelle zum Abutment eine direkt aufgalvanisierte, plastisch verformbare Metallschicht. Als besonders vorteilhaft hat sich eine zu Feingold ähnliche, biokompatible Metallschicht beziehungsweise eine Feingoldschicht herausgestellt. Die Metallschicht muß sich durch den Schraubendruck plastisch verformen. Das erfindungsgemäße Abutment zeichnet sich durch eine direkt aufgalvanisierte Goldschicht aus, welche an den Kontaktstellen zum enossalen Implantatkörper aufgetragen wird. Die Schicht aus hochreinem Feingold kann auf die gesamt Kontaktfläche aufgebracht werden oder auf den peripheren Randbereich des Implantats - also der Kontaktstelle zum periimplantären Weichgewebe - limitiert werden. Die Stärke der Goldschicht beträgt je nach Implantatdesign und durchschnittlicher Fertigungspräzision etwa 10 µm mehr als der durchschnittlich auftretende Fügespalt zwischen enossalem Implantatkörper und dessen Abutment. Ziel dieser leichten Überdimensionierung der Schicht ist das Ausnutzen der plastischen Eigenschaften von galvanogeformten Feingoldgefügen. Da der Implantatwerkstoff einen sehr viel höheren Elastizitätsmodul und eine höhere Dehngrenze als galvanogeformtes Feingold aufweist, wird die Goldschicht durch den entstehenden Druck beim Anziehen der Verbindungsschraube zwischen Implantatabutment und enossalem Implantatkörper plastisch verformt. Diese Goldschicht füllt die herstellungsbedingten Spalträume keimdicht aus - vorausgesetzt, die Spalträume fallen nicht wesentlich größer aus wie die Schichtstärke des Feingoldes.

Des weiteren wird durch die plastische Verformung der Goldschicht eine Vorspannung der Schraube und eine völlig symmetrische Kraftübertragung durch die absolut formschlüssigen Kontaktflächen zwischen Implantatabutment und dem enossalen Implantatkörper erzielt. Beides trägt zur Vermeidung einer Lockerung der Verbindungsschraube in der klinischen Funktionsperiode, also häufiger Wechsellastbeanspruchung bei.

Andere metallische Materialien eignen sich zum Aufgalvanisieren nur dann, wenn sie eine hohe Biokompatibilität aufweisen, wie dies beispielsweise bei Platin der Fall ist, und nicht im Zusammenhang mit dem Implantatwerkstoff relevante korrosive Erscheinung zeigen.

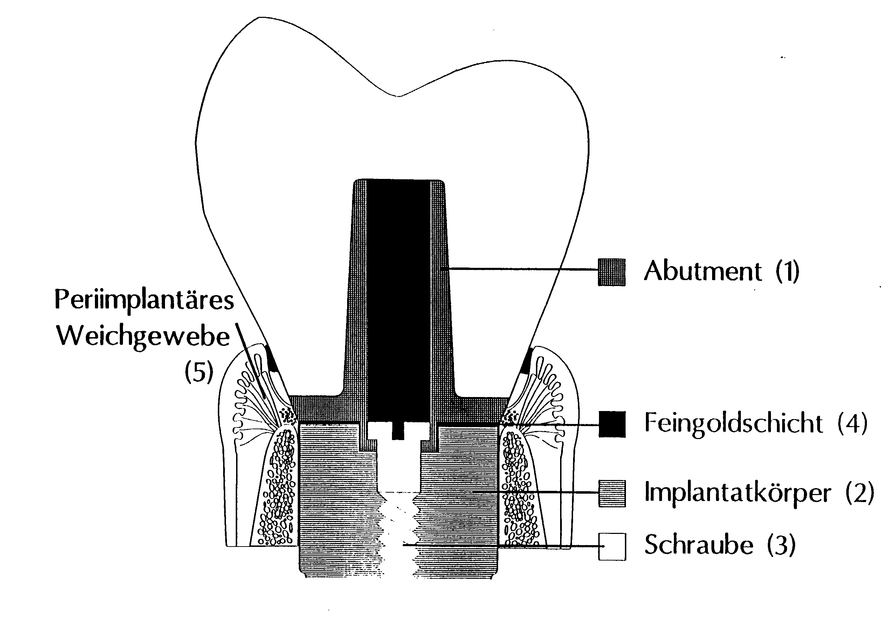

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine besondere Ausführungsform eines erfindungsgemäßen Kieferimplantats in schematischer Darstellung.

Die Zeichnung zeigt in einem axialen Längsschnitt ein Abutment 1, welches mittels einer Schraube 3 auf einem Implantatkörper 2 befestigt ist. Der Fügespalt zwischen Abutment 1 und Implantatkörper 2 wird durch eine aufgalvanisierte Feingoldschicht 4, die auf Abutment 1 aufgebracht ist, vollständig ausgefüllt. Dadurch wird das periimplantäre Weichgewebe 5 von einer chronischen Reizung, ausgehend von einer mikrobiellen Keimbesiedlung des Fügespaltes zwischen Abutment 1 und Implantatkörper 2, geschützt. Zudem wird eine Vorspannung der Schraube 3 erzielt, die zusammen mit der formschlüssigen und gleichmäßigen Kaukraftübertragung mittels plastisch verformter Feingoldschicht 4 zwischen Abutment 1 und Implantatkörper 2 einer Lösung der Schraube 3 entgegenwirkt.

Es ist denkbar, daß die vorliegende Erfindung auch im craniofazialen Bereich zur Aufnahme von Augen-, Nasen- und Ohrepithesen Verwendung findet.

## Patentansprüche

1. Zweiteiliges dentales Implantat mit einem Implantatabutment (1) und einem Implantatkörper (2),
**dadurch gekennzeichnet,**
**daß** das Abutment (1) an der Kontaktstelle zum Implantatkörper (2) oder der Implantatkörper (2) an der Kontaktstelle zum Abutment (1) eine direkt aufgalvanisierte, plastisch verformbare Metallschicht (4) trägt.

2. Implantat nach Anspruch 1,
**dadurch gekennzeichnet,**
**daß** die Metallschicht (4) eine zu Feingold ähnliche, biokompatible Metallschicht ist.

3. Implantat nach Anspruch 1,
**dadurch gekennzeichnet,**
**daß** die Metallschicht (4) aus Feingold besteht.

4. Implantat nach einem der Ansprüche 1 bis 3,
**dadurch gekennzeichnet,**
**daß** die Dicke der Metallschicht 5 bis 20 µm, insbesondere 10 bis 15 µm, vorzugsweise 13 µm beträgt.

## Claims

1. Two-piece dental implant with an implant abutment (1) and an implant body (2),
**characterised in that**
at the point of contact with the implant body (2) the abutment (1) has a plastically formable metal layer (4) which is galvanised directly on, or else the implant body (2) has this at the point of contact with the abutment (1).

2. Implant in accordance with claim 1,
**characterised in that**
the metal layer (4) is a bio-compatible metal layer similar to fine gold.

3. Implant in accordance with claim 1,
**characterised in that**
the metal layer (4) comprises fine gold.

4. Implant in accordance with one of the claims 1 to 3,
**characterised in that**
the thickness of the metal layer is 5 to 20 µm, in particular 10 to 15 µm, preferably 13 µm.

## Revendications

1. Implant dentaire en deux parties, comprenant un about d'implant (1) et un corps d'implant (2), **caractérisé en ce que** l'about (1) porte au niveau du point de contact avec le corps d'implant (2) ou le corps d'implant (2) porte au niveau du point de contact avec l'about (1) une couche métallique (4) plastiquement déformable, directement déposée par voie galvanoplastique.

2. Implant selon la revendication 1, **caractérisé en ce que** la couche métallique est une couche métallique (4) biocompatible semblable à de l'or fin.

3. Implant selon la revendication 1, **caractérisé en ce que** la couche métallique (4) est composée d'or fin.

4. Implant selon l'une des revendications 1 à 3, **caractérisé en ce que** l'épaisseur de la couche métallique est comprise entre 5 et 20 µm, notamment entre 10 et 15 µm, et est de préférence de 13 µm.
